# DEMANDE DE BREVET EUROPEEN

(11) **EP 2 063 029 A1**
(43) Date de publication de la demande: **27.05.2009**
(21) Numéro de dépôt: 08352026.2
(22) Date de dépôt: 21.11.2008
(51) Int. Cl.: E03B 7/04, E03C 1/02, F16L 41/02, F16L 41/03, F24D 17/00

(54) **Dispositif collecteur et ensemble intégrant un tel dispositif**

(30) Priorité: 23.11.2007 FR 0708206
(71) Demandeur: T.P.S. Toulouse Prefabrication Sanitaire, 31320 Castanet Tolosan (FR)
(72) Inventeur: Gonzalez, Grégoire, 31320 Castanet Tolosan (FR)
(74) Mandataire: Hartmann, Jean-Luc

(57) **Abrégé**

Un dispositif collecteur selon l'invention comporte un tube collecteur (2) présentant :
- une sortie longitudinale (4) à au moins une extrémité dudit tube collecteur (2, 2', 2"),
- au moins une première sortie radiale (12),
- au moins deux autres sorties radiales (18, 20, 20', 24), parallèles à la première sortie radiale (12) mais orientées à 180° par rapport à la première sortie radiale (12),
- des moyens de raccordement (10, 16) mâles ou femelles équipant chaque sortie, et
- au moins deux pattes de fixation (6, 6') de manière à permettre la fixation du dispositif collecteur sur une surface de fixation plane de telle sorte que les sorties radiales soient parallèles au plan de fixation.

## Description

La présente invention concerne un dispositif collecteur et un ensemble intégrant un tel dispositif.

L'objet de la présente invention est destiné à être intégré à une installation sanitaire, notamment une installation à usage domestique. Une telle installation comporte divers équipements à alimenter en eau froide et/ou en eau chaude ainsi que divers tuyaux alimentant ces équipements. On trouve souvent un ballon d'eau chaude (tel un ballon connu sous la marque déposée cumulus, ou autre) et des équipements tels des éviers, lavabos, machines à laver, etc.. Ces divers équipements sont posés par un installateur sanitaire qui réalise par la suite le raccordement de tous ces équipements. Pour réaliser ces raccordements, l'installateur sanitaire, sur place, assemble par vissage, sertissage, soudure, etc. de nombreux composants tels des coudes, des T et autres raccords.

Grâce aux diverses pièces existant sur le marché, l'installateur sanitaire peut alors s'adapter à quasiment toutes les situations qui se présentent à lui. Il doit toutefois concevoir sur place de nombreux assemblages de pièces. L'installateur sanitaire passe alors un temps important sur le chantier pour réaliser l'installation. Souvent une pièce manque et doit être approvisionnée.

Un autre problème qui se pose concerne la fixation à une paroi, généralement une paroi verticale, des pièces assemblées. Le plus souvent, les différentes pièces et conduites raccordées à ces pièces sont montées à l'aide de colliers qui sont fixés dans la paroi par vissage. Lors du montage, il est fréquent de venir solliciter mécaniquement les colliers, ou autres moyens de fixation dans la paroi, par exemple au moment de raccorder une conduite sur un collecteur. La paroi, par exemple si elle est réalisée avec une plaque de plâtre, ne résiste pas forcément et les colliers sont alors arrachés.

Les nouvelles réglementations imposent maintenant de limiter la température de l'eau chaude dans une installation sanitaire. Un robinet thermostatique est alors intégré à l'installation et son montage rend généralement l'installation plus complexe et augmente le temps global de réalisation de cette installation.

La présente invention a pour but de fournir un dispositif permettant à un installateur sanitaire de limiter le temps passé sur un chantier et ainsi optimiser globalement sa charge de travail. De préférence, ce dispositif permettra de réaliser également une économie de coûts des composants par rapport à une installation de l'art antérieur équivalente. Avantageusement, la présente invention permettra d'augmenter la résistance à l'arrachage des éléments fixés sur une paroi pour la réalisation de l'installation sanitaire. En outre, l'invention vise à permettre de répondre aux nouvelles réglementations concernant la limitation de la température de l'eau dans une installation sanitaire sans augmenter le temps nécessaire à la réalisation de cette installation.

À cet effet, la présente invention propose un dispositif collecteur destiné à être intégré dans une installation sanitaire comportant un tube collecteur présentant :
- une sortie longitudinale à au moins une extrémité dudit tube collecteur,
- au moins une première sortie radiale,
- au moins deux autres sorties radiales, parallèles à la première sortie radiale mais orientées à 180° par rapport à la première sortie radiale, et
- des moyens de raccordement mâles ou femelles équipant chaque sortie.

Selon la présente invention, ce dispositif collecteur comporte au moins deux pattes de fixation de manière à permettre la fixation du dispositif collecteur sur une surface de fixation plane de telle sorte que les sorties radiales soient parallèles au plan de fixation.

L'utilisation d'un tel dispositif permet d'éviter de réaliser de nombreux raccords lors de la réalisation d'une installation sanitaire. Un tel dispositif collecteur peut être considéré comme quasi universel car grâce à ses sorties dans au moins trois directions, il peut s'adapter à quasiment toutes les situations rencontrées dans le montage d'une installation sanitaire. Il est également possible, à l'aide des pattes de fixation, de fixer le dispositif collecteur contre une paroi et d'utiliser des tuyaux de raccordement souples pour venir relier le dispositif collecteur à un équipement et à un réseau d'une installation sanitaire.

Un tel dispositif collecteur peut être réalisé dans différents matériaux, notamment des métaux, par exemple des alliages à base d'aluminium ou de cuivre. Toutefois, dans une forme de réalisation préférée, un dispositif collecteur selon la présente invention est réalisé par moulage, par exemple moulage par injection, d'une matière synthétique. Le fait que le corps soit réalisé dans une matière non conductrice permet d'éviter des phénomènes électrolytiques que l'on observe parfois dans des installations sanitaires.

Le matériau utilisé pour la réalisation du dispositif collecteur est par exemple un polyphtalamide, de préférence renforcé de fibres, par exemple renforcé à 50% de fibres de verre.

Lorsque le dispositif collecteur est réalisé par moulage, et notamment par moulage d'une matière synthétique, chaque patte de fixation se présente par exemple sous la forme d'une saillie s'étendant du tube collecteur perpendiculairement au plan de fixation, et comporte avantageusement un trou borgne s'étendant depuis l'extrémité libre de la saillie vers le tube collecteur. Le trou borgne peut être utilisé pour la fixation du dispositif collecteur, notamment sa fixation sur une platine comme évoqué ci-après.

Pour une plus grande modularité, le tube collecteur d'un dispositif collecteur selon l'invention présente avantageusement une sortie longitudinale à chacune de ses extrémités. Si cette seconde sortie n'est pas utilisée, il suffit alors de la boucher.

Une forme de réalisation prévoit que le tube collecteur comporte avantageusement trois sorties radiales parallèles à la première sortie radiale et orientées à 180° par rapport à la première sortie radiale. Cette forme de réalisation permet de s'adapter à quasiment la totalité des cas de figures rencontrés lors de la réalisation d'une installation sanitaire. Les sorties non utilisées peuvent être bouchées.

La présente invention concerne également un dispositif de raccordement sanitaire, caractérisé en ce qu'il comporte un dispositif collecteur tel que décrit plus haut et fixé sur une platine de montage. Un tel dispositif présente l'avantage que lorsque la platine et le dispositif collecteur sont fixés sur une paroi et qu'un effort est exercé sur le dispositif collecteur, une partie des efforts sont absorbés par la platine et seule une partie de ceux-ci sont retransmis à la paroi. Outre la facilité de montage accrue, la résistance à l'arrachement est très sensiblement améliorée. Dans le cas d'un dispositif collecteur dans lequel chaque patte de fixation se présente sous la forme d'une saillie s'étendant du tube collecteur perpendiculairement au plan de fixation, et comporte un trou borgne s'étendant depuis l'extrémité libre de la saillie vers le tube collecteur, le dispositif collecteur est avantageusement fixé sur la platine de montage à l'aide de vis autotaraudeuses.

Dans un dispositif de raccordement sanitaire comportant une platine de montage, cette dernière est par exemple une platine sensiblement rectangulaire présentant des trous de fixation à proximité de ses angles.

Une application particulièrement avantageuse de dispositifs collecteurs selon la présente invention est la réalisation d'un dispositif de raccordement sanitaire, caractérisé en ce qu'il comporte deux dispositifs collecteurs tels que décrits plus haut et un robinet thermostatique comportant une arrivée d'eau chaude, une arrivée d'eau froide et une sortie d'eau tempérée, en ce que l'arrivée d'eau froide est raccordée à une sortie longitudinale d'un premier dispositif collecteur tel que décrit plus haut, et en ce que la sortie d'eau tempérée est raccordée à la première sortie radiale du second dispositif collecteur tel que décrit plus haut. Un tel dispositif de raccordement peut être quasi universellement utilisé pour réaliser un raccord d'un ballon d'eau chaude ou autre type de réservoir destiné à contenir de l'eau chaude et permet de limiter la température de l'eau en sortie grâce à la présence du robinet thermostatique et au montage réalisé, dans lequel ledit robinet relie les deux dispositifs collecteurs.

Dans un tel dispositif de raccordement sanitaire, le premier dispositif collecteur comporte par exemple un tube collecteur avec deux sorties longitudinales dont l'une est raccordée au robinet thermostatique, une première sortie radiale et trois sorties radiales orientées à 180° par rapport à la première sortie radiale et/ou le second dispositif collecteur comporte un tube collecteur avec une seule sortie longitudinale, une première sortie radiale raccordée au robinet thermostatique et deux sorties radiales orientées à 180° par rapport à la première sortie radiale.

Pour effectuer le raccordement d'un équipement sanitaire, tel par exemple un évier, un lavabo, une douche, etc. , l'invention propose un dispositif de raccordement sanitaire comportant deux dispositifs collecteurs tels que décrits plus haut, chaque dispositif collecteur comportant une première sortie radiale et deux sorties radiales orientées à 180° par rapport à la première sortie radiale.

Un dispositif de raccordement sanitaire tel que décrit peut également comporter en outre une platine destinée à recevoir les dispositifs collecteurs, les deux tubes collecteurs étant montés parallèlement et les premières sorties radiales étant orientées du même côté par rapport aux tubes collecteurs. Une telle platine permet de faciliter le montage du dispositif de raccordement et de réaliser une protection vis-à-vis de l'extérieur. Dans cette forme de réalisation intégrant une platine, un couvercle, destiné à coopérer avec la platine pour former un passage tubulaire sensiblement parallèle aux sorties radiales des dispositifs collecteurs, peut également être prévu.

Des détails et avantages de la présente invention ressortiront mieux de la description qui suit, faite en référence aux dessins schématiques annexés sur lesquels :
La figure 1 représente en vue de face une première forme de réalisation d'un dispositif collecteur selon l'invention,
La figure 2 représente en vue de face et en vue de côté une seconde forme de réalisation d'un dispositif collecteur selon l'invention,
La figure 3 est une vue en coupe selon la ligne de coupe III-III de la figure 2,
La figure 4 représente un kit d'installation sanitaire utilisant deux dispositifs collecteurs selon l'invention et permettant de réaliser le raccordement d'un ballon d'eau chaude,
La figure 5 est une vue en perspective d'une forme de réalisation préférée d'un dispositif de raccordement sanitaire selon la présente invention,
La figure 6 est une vue de dessus du collecteur montré sur la figure 5, et
La figure 7 est une vue en coupe selon la ligne de coupe VII-VII de la figure 6.

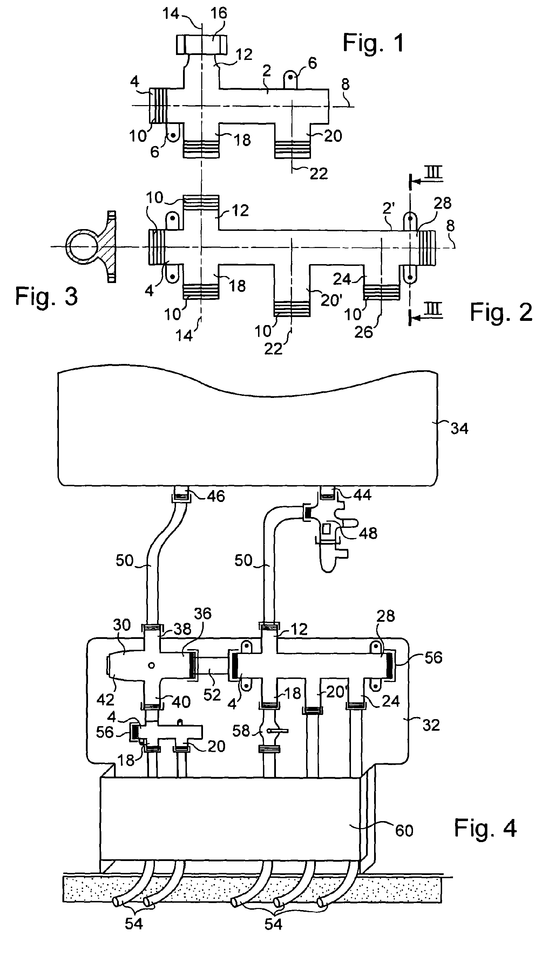

La figure 1 représente un dispositif collecteur comportant un tube collecteur 2 présentant à l'une de ses extrémités une sortie longitudinale 4, trois sorties radiales et deux pattes de fixation 6.

Le tube collecteur 2 est un tube rectiligne d'axe longitudinal 8. Sa section peut être circulaire mais d'autres sections sont envisageables. Une section carrée ou hexagonale est également bien adaptée à la présente invention. Dans la forme de réalisation représentée sur la figure 1, le tube collecteur 2 est ouvert du côté de la sortie longitudinale 4 à une première extrémité et est fermé à son autre extrémité. La sortie longitudinale 4 du tube collecteur 2 est munie de moyens de raccordement. Dans la forme de réalisation représentée sur la figure 1, il s'agit de moyens de raccordement mâles, et plus précisément d'un filetage 10. Le diamètre extérieur de la sortie longitudinale 4 est par exemple de 3/4 pouce (par la suite 3/4") soit 19,05 mm.

Comme on peut le voir sur la figure 1, une première sortie radiale 12 est réalisée sur le tube collecteur 2. Cette première sortie radiale 12 est centrée sur un premier axe transversal 14 qui coupe l'axe longitudinal 8 et lui est perpendiculaire. Cette première sortie radiale 12 est également munie de moyens de raccordement. Dans la forme de réalisation représentée sur la figure 1, ces moyens de raccordement sont des moyens de raccordement femelles, et plus particulièrement comportent un écrou femelle 16 monté prisonnier autour de la première sortie radiale 12. Cet écrou 16 présente par exemple un taraudage pour recevoir un filetage similaire au filetage 10 de 3/4".

On remarque sur la figure 1 que le tube collecteur comporte encore une seconde sortie radiale 18 et une troisième sortie radiale 20. Ces deux autres sorties radiales sont également centrées sur un axe. Chacun de ces axes est parallèle au premier axe transversal 14. Dans une forme de réalisation préférée, les axes des seconde et troisième sorties radiales coupent également l'axe longitudinal 8 du tube collecteur. Dans la forme de réalisation représentée au dessin, l'axe de la seconde sortie radiale 18 correspond au premier axe transversal 14. La seconde sortie radiale 18 et la troisième sortie radiale 20 sont orientés à 180° par rapport à la première sortie radiale 12. Cela signifie qu'elles se trouvent à l'opposé de la première sortie radiale 12 par rapport au tube collecteur 2. Dans la forme de réalisation représentée sur la figure 1, on a donc une sortie radiale d'un côté du tube collecteur 2 et deux sorties radiales de l'autre côté du tube collecteur 2.

La troisième sortie radiale 20 est centrée sur un second axe transversal 22.

La seconde sortie radiale 18 et la troisième sortie radiale 20 sont par exemple elles aussi équipées d'un filetage 10 similaire au filetage 10 de la première sortie longitudinale 4. Le second axe transversal est espacé du premier axe transversal 14 de manière à pouvoir réaliser un raccordement sur l'une des sorties radiales sans être gênée par l'autre. Une distance de l'ordre de 50 mm peut être ici envisagée.

Tous les exemples numériques donnés ci-dessus ainsi que les exemples numériques donnés dans la suite de la description sont donnés à titre purement illustratif et non limitatif. Les dimensions des sorties et de l'écrou décrits peuvent être différentes de ce qui est indiqué pour tenir compte de la dimension de l'installation dans laquelle le dispositif collecteur doit être intégré.

Les pattes de fixation 6 permettent la fixation du dispositif collecteur sur une surface de fixation plane. Une fois le dispositif collecteur selon l'invention fixé sur cette surface de fixation, l'axe longitudinal 8 et les axes transversaux sont parallèles à la surface de fixation. Dans la pratique, la surface de fixation est un mur ou une cloison généralement verticale (mais pas nécessairement) et les diverses sorties du dispositif collecteur sont alors raccordés à des tuyaux (non représentés sur la figure 1 mais visible sur la figure 3) qui s'étendent, sur une partie au moins, parallèlement à la paroi sur laquelle le dispositif collecteur est fixé.

La figure 2 représente une variante de réalisation d'un dispositif collecteur selon l'invention. Ce dispositif correspond à une version "allongée" du dispositif collecteur de la figure 1. Il est choisi ici de reprendre les mêmes références pour désigner les éléments de ce dispositif qui sont semblables à des éléments du dispositif collecteur de la figure 1. On retrouve ainsi un dispositif collecteur comportant un tube collecteur 2' (plus long que le tube collecteur 2) centré sur un axe longitudinal 8 présentant une première sortie longitudinale 4, une première sortie radiale 12 centrée sur un premier axe transversal 14. Sur ce premier axe transversal 14 est également centrée une seconde sortie radiale 18. On retrouve ici aussi une troisième sortie radiale 20' centrée sur un axe transversal 22. Comme le dispositif collecteur de la figure 1, ce dispositif collecteur comporte des pattes de fixation 6 que l'on voit mieux sur la figure 3. Ces pattes de fixation 6 peuvent être identiques aux pattes de fixation du dispositif collecteur de la figure 1.

Par rapport au dispositif collecteur de la figure 1, le dispositif collecteur de la figure 2 comporte en plus une quatrième sortie radiale 24 centrée sur un troisième axe transversal 26, ainsi qu'une seconde sortie longitudinale 28.

Dans cette forme de réalisation, il a été choisi de munir toutes les sorties d'un filetage 10, semblable au filetage 10 du dispositif collecteur de la figure 1. Ce filetage 3/4" est appelé parfois filetage 20/27 (le premier nombre indiquant le diamètre du filetage et le second le nombre de filet par pouce). Bien entendu, d'autres dimensions de filetage pourraient être prévues ou on pourrait également avoir d'autres moyens de raccordement. Il pourrait s'agir de moyens de raccordement femelle ou d'autres types de raccordement, par exemple pour réaliser un raccordement par sertissage.

Sur la figure 2, on remarque que la troisième sortie radiale 20' est rallongée par rapport à la seconde sortie radiale 18 et à la quatrième sortie radiale 24. Ainsi, il est plus facile de venir raccorder un tuyau ou tout type de raccord, au filetage 10 de la troisième sortie radiale 20'. Les deux autres sorties radiales situées du même côté du tube collecteur 2' ne gènent alors pas pour réaliser le raccordement.

La figure 4 représente un ensemble mettant en oeuvre deux dispositifs collecteurs selon la présente invention. On retrouve ici un dispositif collecteur du type de celui représenté sur la figure 1 et un dispositif collecteur du type de celui représenté sur la figure 2. Chacun de ces dispositifs collecteurs est raccordé à un robinet thermostatique 30 et l'ensemble est monté sur une platine 32. Cet ensemble est utilisé pour le raccordement d'un ballon d'eau chaude 34.

On suppose dans la suite de la description que l'ensemble décrit est fixé sur une paroi verticale, que les axes longitudinaux 8 des dispositifs collecteurs sont disposés sensiblement à l'horizontale et que les axes transversaux sont quant à eux disposés à la verticale.

Ainsi, l'ensemble décrit est disposé en dessous du ballon d'eau chaude 34. Les deux dispositifs collecteurs sont décalés horizontalement et verticalement. Le robinet thermostatique 30 comporte une entrée d'eau froide 36, une entrée d'eau chaude 38 et une sortie d'eau tempérée 40. Un bouton de contrôle 42 permet le réglage de l'eau au niveau de la sortie d'eau tempérée 40.

On appellera ci-après premier dispositif collecteur le dispositif collecteur représenté sur la figure 4 qui correspond au dispositif collecteur de la figure 1 et on appellera second dispositif collecteur le dispositif collecteur de la figure 4 correspondant au dispositif collecteur représenté sur la figure 2.

Le ballon d'eau chaude 34 comporte quant à lui une entrée d'eau froide 44 et une sortie d'eau chaude 46. Un groupe de sécurité 48 est monté sur l'entrée d'eau froide 44. Le montage réalisé est alors le suivant :
- La sortie d'eau chaude 46 du ballon d'eau chaude 34 est raccordée à l'entrée d'eau chaude 38 du robinet thermostatique 30 par l'intermédiaire d'un raccord flexible 50.
- L'entrée d'eau froide 44 du ballon d'eau chaude 34 est raccordée à la première sortie radiale 12 du second dispositif collecteur par l'intermédiaire d'un raccord flexible 50 fixé, dans la forme de réalisation représentée, sur le groupe de sécurité 48 du ballon d'eau chaude 34.
- L'entrée d'eau froide 36 du robinet thermostatique 30 est reliée par l'intermédiaire d'un raccord femelle/femelle 52 à la première sortie longitudinale 4 du second dispositif collecteur.
- La sortie d'eau tempérée 40 du robinet thermostatique est raccordée directement à la première sortie radiale 12 du premier dispositif collecteur.
- La seconde sortie radiale 18 et la troisième sortie radiale 20 du premier dispositif collecteur sont chacune raccordées à un tuyau d'alimentation en eau chaude destiné à alimenter un équipement tel par exemple une douche, une baignoire, un lavabo, un évier, etc.. Ces tuyaux d'alimentation 54 peuvent être des tuyaux souples réalisés en matière synthétique comme suggéré sur la figure 4 mais il peut également s'agir de tuyaux rigides, en cuivre ou similaire. La sortie longitudinale 4 du premier dispositif collecteur est fermée par un bouchon 56 (le terme couvercle serait peut être plus approprié car on vient ici recouvrir la sortie longitudinale 4. Toutefois le terme bouchon est le terme habituellement utilisé.
- La seconde sortie radiale 18 est raccordée directement à une vanne d'arrêt 58. On suppose par exemple ici que cette sortie radiale est connectée à l'alimentation générale en eau de l'installation considérée. Si ce n'est pas le cas, une telle vanne d'arrêt peut avoir un sens si l'on souhaite isoler une partie de l'installation sanitaire. Cette vanne d'arrêt 58 et la sortie radiale 18 correspondante sont alimentées en eau (froide) par un tuyau d'alimentation 54 semblable aux tuyaux d'alimentation 54 décrits précédemment.
- La troisième sortie 20' et la quatrième sortie 24 sont chacune raccordées à un tuyau d'alimentation 54.
- Enfin, la seconde sortie longitudinale 28 du second dispositif collecteur est fermée elle aussi par un bouchon 56 (couvercle).

Le fonctionnement de cet ensemble est alors le suivant. De l'eau froide arrive par un tuyau d'alimentation 54 sur la première sortie radiale 18 et alimente le second dispositif collecteur. Lorsque la vanne d'arrêt 58 est ouverte, l'eau peut circuler librement et elle alimente alors les tuyaux d'alimentation 54 raccordés à la troisième sortie radiale 20' et la quatrième sortie radiale 24. Ces tuyaux d'alimentation partent par exemple l'un vers une douche et l'autre vers un évier de cuisine (il s'agit là d'un exemple purement illustratif qui va être poursuivi ci-après). Le ballon d'eau chaude 34 est quant à lui alimenté en eau froide par la première sortie radiale 12 du second dispositif collecteur. L'eau froide entre dans le ballon d'eau chaude 34, est chauffée, puis ressort par la sortie eau chaude 46 du ballon d'eau chaude 34 pour être introduite dans le robinet thermostatique 30. Comme décrit plus haut, ce robinet thermostatique 30 est relié au second dispositif collecteur et peut recevoir de celui-ci de l'eau froide. Le robinet thermostatique 30 effectue alors un mélange d'eau chaude et d'eau froide pour fournir à sa sortie de l'eau tempérée qui vient alimenter la première sortie radiale 12 du premier dispositif collecteur. Cette eau tempérée (chaude) est alors distribuée par l'intermédiaire des tuyaux d'alimentation 54 reliés à la seconde sortie radiale 18 et la troisième sortie radiale 20 du premier dispositif collecteur. En reprenant l'exemple précédent, on peut supposer par exemple qu'un tuyau d'alimentation 54 va alimenter l'évier de cuisine et l'autre tuyau d'alimentation va alimenter quant à lui la douche.

Cet ensemble décrit plus haut peut être monté à l'avance et être fixé ensuite sur place, sur le chantier d'installation. La platine 32 peut être une platine indépendante présentant uniquement quelques alésages au niveau des pattes de fixation 6 d'un ou des dispositifs collecteurs. Ainsi, en fixant les dispositifs collecteurs par l'intermédiaire des pattes de fixation 6 contre la paroi, la platine est alors prise en sandwich et maintenue. On peut également prévoir un pré-montage sur la platine 32 et venir par la suite fixer cette platine sur la paroi. Pour protéger les tuyaux d'alimentation 54 qui, comme représentés aux dessins, s'étendent sensiblement verticalement en étant alignés dans un même plan, on peut prévoir un couvercle 60 se présentant sous la forme d'une goulotte destinée à venir recouvrir les tuyaux d'alimentation 54. On peut prévoir, au niveau de la platine 32, des rebords pliés à angle droit par rapport au plan de la platine 32 pour recevoir le couvercle 60. Une fixation par vissage peut ici être envisagée.

On remarque que l'on réalise ainsi très facilement le raccordement d'un ballon d'eau chaude. Il suffit simplement de raccorder les tuyaux flexibles 50 à l'ensemble comprenant les deux dispositifs collecteurs et le robinet thermostatique et raccorder également les tuyaux d'alimentation 54. La platine 32 est ensuite fixée contre une paroi sous le ballon d'eau chaude 34. Cette installation peut ainsi être réalisée très rapidement et l'installateur sanitaire nécessite sur place uniquement quelques outils pour le vissage et le serrage de raccords.

En outre, un tel ensemble permet de répondre aux normes actuelles imposant de limiter la température de l'eau chaude dans une installation sanitaire. Le robinet thermostatique peut ainsi garantir que la température de l'eau chaude alimentant l'installation sanitaire n'excède pas la température maximale autorisée.

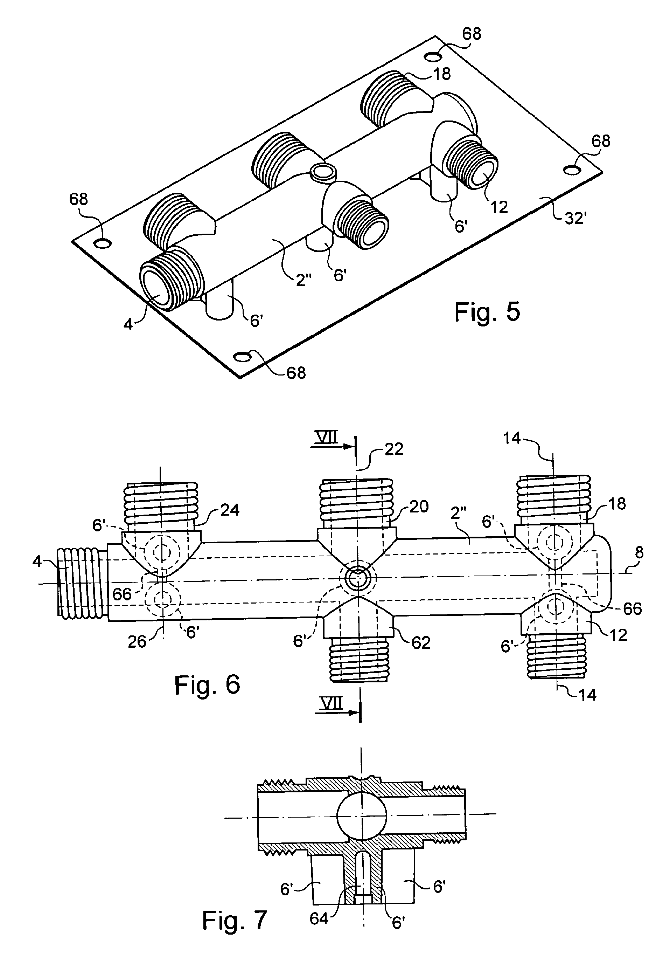

Les figures 5 à 7 représentent une autre variante d'un dispositif collecteur selon l'invention. De même que précédemment, il est choisi ici de reprendre les mêmes références pour désigner les éléments de ce dispositif qui sont semblables à des éléments des dispositifs collecteurs des figures 1 et 2. On retrouve ainsi un dispositif collecteur comportant un tube collecteur 2" (sensiblement de la même longueur que le tube collecteur 2' de la figure 2) centré sur un axe longitudinal 8. Ce tube collecteur 2" présente une seule sortie longitudinale 4, une première sortie radiale 12 centrée sur un premier axe transversal 14. Sur ce premier axe transversal 14 est également centrée une seconde sortie radiale 18. Du même côté du tube collecteur 2" que la seconde sortie radiale 18, se trouvent également une troisième sortie radiale 20 centrée sur un axe transversal 22 et une quatrième sortie radiale 24 centrée sur un troisième axe transversal 26. Dans cette forme de réalisation, on trouve également une cinquième sortie radiale 62 qui est également centré sur le second axe transversal 22. D'autres sorties pourraient être envisagées et/ou certaines sorties pourraient être ici supprimées sans pour autant sortir du cadre de l'invention.

La forme de réalisation du dispositif collecteur des figures 5 à 7 est réalisé en matière synthétique. Afin de répondre aux exigences en vigueur pour les installations prévues pour de l'eau potable froide et chaude, il est proposé que le matériau utilisé soit un polyphtalamide. De préférence, celui-ci est renforcé de fibres, notamment de fibres de verre, par exemple renforcé à 50% de fibres de verre. Un tel matériau est connu sous la marque Grivory et sous l'appellation HT1V-5 FWA.

Dans cette forme de réalisation, le tube collecteur 2" est muni de pattes de fixation 6'. Chaque patte de fixation 6' présente une forme sensiblement cylindrique et s'étend sous le tube collecteur 2" à partir de celui-ci perpendiculairement au plan contenant les axes transversaux (premier axe transversal 14, second axe transversal 22 et troisième axe transversal 26) Ce plan contient aussi l'axe longitudinal 8 et est parallèle à un plan de fixation définit ci-après. Les pattes de fixation 6' sont réalisées de telle sorte que les extrémités libres des cylindres soient toutes dans un même plan appelé plan de fixation.

Comme illustré sur la vue en coupe de la figure 7, chaque patte de fixation 6' présente un trou borgne 64 qui s'étend à partir de l'extrémité libre de la patte de fixation 6' correspondante vers le tube collecteur 2", sans bien entendu déboucher dans celui-ci.

Dans la forme de réalisation représentée, le dispositif collecteur des figures 5 à 7 comporte cinq pattes de fixation 6' : une première centrée sur le second axe transversal 22 et l'axe longitudinal 8, deux centrées sur le premier axe transversal 14 et disposées symétriquement par rapport à l'axe longitudinal 8 et deux centrées sur le troisième axe transversal 26 et disposées symétriquement par rapport à l'axe longitudinal 8. Les pattes de fixation 6' disposées d'une part sur le premier axe transversal 14 et d'autre part sur le second axe transversal 26 sont reliées entre elles par une nervure 66.

Le dispositif collecteur de la figure 5 forme avec une platine 32' un dispositif de raccordement sanitaire particulièrement avantageux. La platine 32' est de forme sensiblement rectangulaire (mais toute autre forme pourrait également convenir). Elle est fixée sur le dispositif collecteur par des vis autotaraudeuses (non représentées) qui viennent s'engager chacune dans un trou borgne 64. Des alésages non représentés permettent le passage des vis autotaraudeuses à travers la platine 32' pour assurer la fixation l'un sur l'autre du dispositif collecteur et de la platine 32'.

La platine 32' est en outre munie d'alésages 68 pour permettre la fixation de la platine sur une paroi, par exemple une paroi verticale telle une cloison ou un mur. Les alésages 68 sont par exemple réalisés à proximité des angles de la platine 32'. D'autres positions peuvent convenir mais les alésages 68 sont de préférence éloignés les uns des autres.

Lorsqu'un tel dispositif de raccordement est fixé contre une paroi par vissage au travers des alésages 68 et que le dispositif collecteur est sollicité mécaniquement, pour le raccord d'une conduite par exemple, les effort mécaniques sont encaissés en partie par la platine 32' et le reste des efforts est retransmis aux vis passant dans les alésages 68. On augmente ainsi très sensiblement la résistance à l'arrachement. En effet, dans un montage classique à l'aide par exemple de colliers, les efforts sont directement retransmis aux vis de fixation des colliers quasiment sans atténuation. Avec une platine comme proposé dans la présente invention, la platine absorbe une partie des efforts et les efforts restant sont répartis sur un plus grand nombre de vis. De plus, grâce à l'espacement entre les vis, le moment exercé est limité, réduisant également le risque d'arrachement des vis.

Les dispositifs collecteurs selon la présente invention peuvent trouver d'autres applications dans une installation sanitaire. Pour alimenter par exemple un lavabo, il est nécessaire de prévoir une arrivée d'eau froide et une arrivée d'eau chaude. Si le lavabo n'est pas à l'extrémité de l'installation sanitaire, il faut également prévoir un départ d'eau froide et un départ d'eau chaude vers un autre équipement, tel par exemple un autre lavabo, une douche, etc.. On peut alors prévoir pour l'eau chaude et l'eau froide d'utiliser à chaque fois un dispositif collecteur tel celui représenté sur la figure 1. La première sortie radiale est utilisée pour être connectée au lavabo, une autre sortie radiale, disposée à l'opposé, reçoit l'alimentation en eau et l'autre sortie radiale est le point de départ vers l'équipement suivant de l'installation. La sortie longitudinale du dispositif collecteur peut être utilisée pour réaliser un autre départ vers un autre équipement si on se trouve au niveau d'une dérivation en T de l'installation sanitaire. Le dispositif collecteur destiné à l'eau froide et le dispositif collecteur destiné à l'eau chaude peuvent être également fixés sur une platine semblable à la platine 32 décrite précédemment. On réalise alors également un ensemble permettant de facilement raccorder le lavabo (ou un autre équipement). Une fois sur place, il suffit en effet de raccorder les tuyaux allant vers l'équipement (le lavabo), les tuyaux d'alimentation en eau et les tuyaux de départ. Ensuite, ou au préalable, la platine est fixée contre la paroi. Ici aussi, peu d'outillage est nécessaire et le temps de raccordement est très restreint.

La présente invention permet ainsi de réaliser d'importants gains de temps lors de la réalisation d'une installation sanitaire. Elle présente l'avantage de pouvoir s'adapter à quasiment toutes les situations qui peuvent se présenter à un installateur sanitaire. Grâce à des sorties dans trois ou quatre directions, un dispositif collecteur selon l'invention peut facilement être alimenté en eau et redistribuer cette eau dans une direction souhaitée.

En outre, comme montré plus haut, il est facile avec le dispositif collecteur selon l'invention de réaliser le raccordement d'un ballon d'eau chaude en garantissant, conformément aux normes en vigueur, une sortie d'eau chaude tempérée.

La présente invention ne se limite pas aux formes de réalisation décrites ci-dessus à titre d'exemples non limitatifs. Elle concerne également toutes les variantes de réalisation à la porte de l'homme du métier dans le cadre des revendications ci-après.

## Revendications

1. Dispositif collecteur destiné à être intégré dans une installation sanitaire comportant un tube collecteur (2, 2', 2") présentant :
- une sortie longitudinale (4) à au moins une extrémité dudit tube collecteur (2, 2', 2"),
- au moins une première sortie radiale (12),
- au moins deux autres sorties radiales (18, 20, 20', 24), parallèles à la première sortie radiale (12) mais orientées à 180° par rapport à la première sortie radiale (12), et
- des moyens de raccordement (10, 16) mâles ou femelles équipant chaque sortie,
**caractérisé en ce qu'**il comporte au moins deux pattes de fixation (6, 6') de manière à permettre la fixation du dispositif collecteur sur une surface de fixation plane de telle sorte que les sorties radiales soient parallèles au plan de fixation.

2. Dispositif collecteur selon la revendication 1, **caractérisé en ce qu'**il est réalisé par moulage d'une matière synthétique.

3. Dispositif collecteur selon la revendication 2, **caractérisé en ce qu'**il est réalisé en polyphtalamide renforcé de fibres.

4. Dispositif collecteur selon l'une des revendications 1 à 3, **caractérisé en ce que** chaque patte de fixation (6') se présente sous la forme d'une saillie s'étendant du tube collecteur (2") perpendiculairement au plan de fixation, et comporte un trou borgne (64) s'étendant depuis l'extrémité libre de la saillie vers le tube collecteur (2").

5. Dispositif collecteur selon l'une des revendications 1 à 4, **caractérisé en ce que** le tube collecteur (2, 2') présente une sortie longitudinale (4, 28) à chacune de ses extrémités.

6. Dispositif collecteur selon l'une des revendications 1 à 5, **caractérisé en ce que** le tube collecteur (2, 2', 2") comporte trois sorties radiales (18, , 20, 20', 24) parallèles à la première sortie radiale (12) et orientées à 180° par rapport à la première sortie radiale (12).

7. Dispositif de raccordement sanitaire, **caractérisé en ce qu'**il comporte un dispositif collecteur selon l'une des revendications 1 à 5 fixé sur une platine (32, 32') de montage.

8. Dispositif de raccordement sanitaire, **caractérisé en ce qu'**il comporte un dispositif collecteur selon la revendication 4 et une platine de montage (32, 32'), et **en ce que** le dispositif collecteur est fixé sur la platine de montage (32, 32') à l'aide de vis autotaraudeuses.

9. Dispositif de raccordement sanitaire selon l'une des revendications 7 ou 8, **caractérisé en ce que** la platine de montage (32') est une platine sensiblement rectangulaire présentant des trous de fixation (68) à proximité de ses angles.

10. Dispositif de raccordement sanitaire, **caractérisé en ce qu'**il comporte deux dispositifs collecteurs selon la revendication 1 et un robinet thermostatique (30) comportant une arrivée d'eau chaude (38), une arrivée d'eau froide (36) et une sortie d'eau tempérée (40), **en ce que** l'arrivée d'eau froide (36) est raccordée à une sortie longitudinale (4) d'un premier dispositif collecteur selon la revendication 1, et **en ce que** la sortie d'eau tempérée (40) est raccordée à la première sortie radiale (12) du second dispositif collecteur selon la revendication 1.

11. Dispositif de raccordement sanitaire selon la revendication 10, **caractérisé en ce que** le premier dispositif collecteur comporte un tube collecteur (2') avec deux sorties longitudinales (4, 28) dont l'une est raccordée au robinet thermostatique (30), une première sortie radiale (12) et trois sorties radiales (18, 20', 24) orientées à 180° par rapport à la première sortie radiale.

12. Dispositif de raccordement sanitaire selon l'une des revendications 10 ou 11, **caractérisé en ce que** le second dispositif collecteur comporte un tube collecteur (2) avec une seule sortie longitudinale (4), une première sortie radiale (12) raccordée au robinet thermostatique et deux sorties radiales (18, 20) orientées à 180° par rapport à la première sortie radiale (12).

13. Dispositif de raccordement sanitaire, **caractérisé en ce qu'**il comporte deux dispositifs collecteurs selon la revendication 1, **en ce que** chaque dispositif collecteur comporte une première sortie radiale (12) et deux sorties radiales (18, 20) orientées à 180° par rapport à la première sortie radiale (12).

14. Dispositif de raccordement sanitaire selon l'une des revendications 10 à 13, **caractérisé en ce qu'**il comporte en outre une platine (32) destinée à recevoir les dispositifs collecteurs, les deux tubes collecteurs (2) étant montés parallèlement et les premières sorties radiales (12) étant orientés du même côté par rapport aux tubes collecteurs (2).

15. Dispositif de raccordement sanitaire selon la revendication 14, **caractérisé en ce qu'**elle comporte en outre un couvercle (60), destiné à coopérer avec la platine (32) pour former un passage tubulaire sensiblement parallèle aux sorties radiales des dispositifs collecteurs.
